(19) Europäisches Patentamt
European Patent Office
Office européen des brevets

(11) EP 4 557 732 A1

(12) EUROPEAN PATENT APPLICATION
published in accordance with Art. 153(4) EPC

(43) Date of publication:
21.05.2025 Bulletin 2025/21

(51) International Patent Classification (IPC):
H04N 19/513 (2014.01)    H04N 19/70 (2014.01)
H04N 19/176 (2014.01)    H04N 19/119 (2014.01)
H04N 19/96 (2014.01)

(21) Application number: 23839987.7

(22) Date of filing: 13.07.2023

(52) Cooperative Patent Classification (CPC):
H04N 19/119; H04N 19/176; H04N 19/513;
H04N 19/70; H04N 19/96

(86) International application number:
PCT/KR2023/010011

(87) International publication number:
WO 2024/014896 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.07.2022 KR 20220086477

(71) Applicant: LG Electronics Inc.
Yeongdeungpo-gu
Seoul 07336 (KR)

(72) Inventor: JANG, Hyeong Moon
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **IMAGE CODING/DECODING METHOD BASED ON MOVEMENT INFORMATION REFINEMENT, METHOD FOR TRANSMITTING BITSTREAM, AND RECORDING MEDIUM STORING BITSTREAM**

(57) An image encoding/decoding method and apparatus are provided. An image decoding method may comprise deriving motion information of a current block, refining the motion information based on an enabled predetermined refinement tool, and generating a prediction block of the current block based on the refined motion information. The refinement tool may include a template matching-based tool and a bilateral matching-based tool, and whether the bilateral matching-based tool is enabled may be determined regardless of whether the template matching-based tool is enabled.

FIG. 14

## Description

### Technical Field

The present disclosure relates to an image encoding/decoding method and apparatus and a recording medium for storing a bitstream, and, more particularly, to an image encoding/decoding method and apparatus based on motion information refinement and a recording medium for storing a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to provide an image encoding/decoding method and apparatus based on motion information refinement.

In addition, an object of the present disclosure is to provide an image encoding/decoding method and apparatus that performs motion information refinement based on an independently controlled template matching-based tool or bilateral matching-based tool.

Also, an object of the present disclosure is to provide a non-transitory recording medium storing a bitstream received, decoded and used to reconstruct an image by an image decoding method or apparatus according to the present disclosure.

Also, an object of the present disclosure is to provide a non-transitory computer-readable medium recording a bitstream received and decoded by an apparatus for decoding an image.

Also, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise deriving motion information of a current block, refining the motion information based on an enabled predetermined refinement tool, and generating a prediction block of the current block based on the refined motion information. The refinement tool may include a template matching-based tool and a bilateral matching-based tool, and whether the bilateral matching-based tool is enabled may be determined regardless of whether the template matching-based tool is enabled.

An image decoding apparatus according to another aspect of the present disclosure may comprise a memory and at least one processor. The at least one processor may derive motion information of a current block, refine the motion information based on an enabled predetermined refinement tool and generate a prediction block of the current block based on the refined motion information. The refinement tool may include a template matching-based tool and a bilateral matching-based tool, and whether the bilateral matching-based tool is enabled may be determined regardless of whether the template matching-based tool is enabled.

An image encoding method according to another aspect of the present disclosure may comprise deriving motion information of a current block and generating a prediction block of the current block based on the motion information. Information on decoder-side refinement of the motion information may be encoded in a bitstream, and information on the decoder-side refinement may include flag information indicating whether a predetermined refinement tool is enabled, the refinement tool may include a template matching-based tool and a bilateral matching-based tool, and whether the bilateral matching-based tool is enabled may be determined regardless of whether the template matching-based tool is enabled.

A computer-readable recording medium according to another aspect of the present disclosure can store a bitstream generated by an image encoding method or image encoding apparatus of the present disclosure.

A transmission method according to another aspect of the present disclosure can transmit a bitstream generated by an image encoding method or image encoding apparatus of the present disclosure.

The features briefly summarized above with respect to the present disclosure are merely exemplary aspects of the detailed description below of the present disclosure, and do not limit the scope of the present disclosure.

## Advantageous Effects

According to the present disclosure, it is possible to provide an image encoding/decoding method and apparatus with improved encoding/decoding efficiency.

In addition, according to the present disclosure, it is possible to provide an image encoding/decoding method and apparatus based on motion information refinement.

In addition, according to the present disclosure, it is possible to provide an image encoding/decoding method and apparatus that performs motion information refinement based on an independently controlled template matching-based tool or bilateral matching-based tool.

According to the present disclosure, it is possible to provide a non-transitory computer-readable recording medium storing a bitstream generated by an image encoding method or apparatus.

According to the present disclosure, it is possible to provide a non-transitory computer-readable recording medium storing a bitstream received, decoded and used to reconstruct an image by an image decoding apparatus according to the present disclosure.

According to the present disclosure, it is possible to provide a method for transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

## Description of Drawings

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a diagram schematically showing an inter prediction unit of an image encoding apparatus.

FIG. 5 is a flowchart illustrating a method of encoding an image based on inter prediction.

FIG. 6 is a diagram schematically showing an inter prediction unit of an image decoding apparatus.

FIG. 7 is a flowchart illustrating a method of decoding an image based on inter prediction.

FIG. 8 is a flowchart showing an inter prediction method.

FIG. 9 is a diagram for explaining a DMVR process.

FIG. 10 is a diagram for explaining a template matching-based encoding/decoding method.

FIG. 11 is a diagram showing search areas that may be applied in multi-pass DMVR.

FIG. 12 is a flowchart illustrating a motion information refinement process according to an embodiment of the present disclosure.

FIG. 13 is a flowchart illustrating an image encoding method according to an embodiment of the present disclosure.

FIG. 14 is a flowchart illustrating an image decoding method according to an embodiment of the present disclosure.

FIG. 15 is a view showing a content streaming system to which an embodiment of the present disclosure is applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively"

## Overview of video coding system

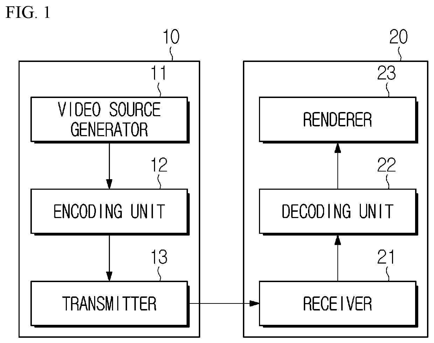

FIG. 1 is a view schematically showing a video coding system, to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

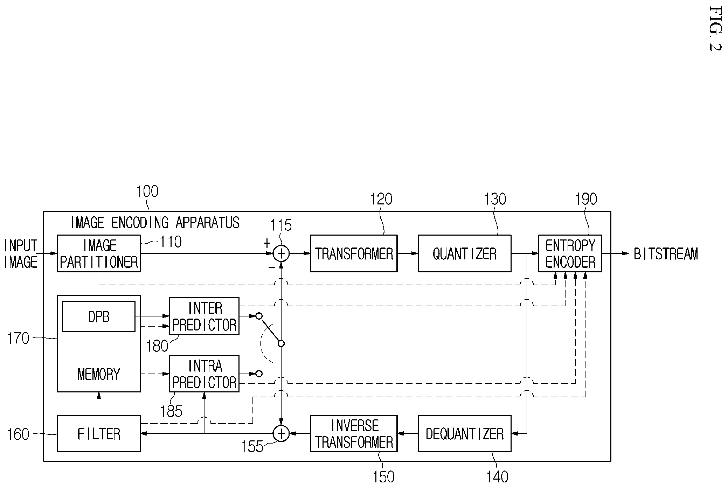

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

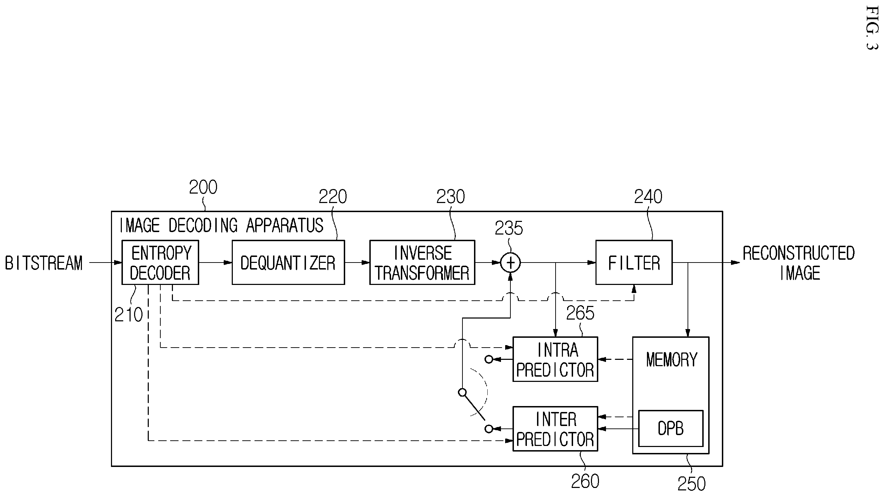

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra predictor 265. The inter predictor (inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra predictor 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter predictor 260 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra predictor 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra predictor 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra predictor 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

## Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

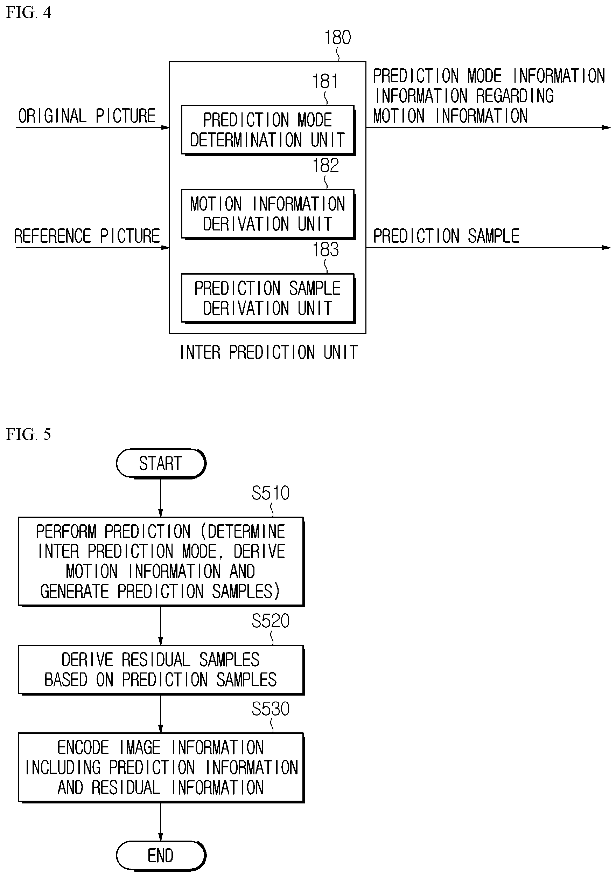

FIG. 4 is a diagram schematically showing the inter prediction unit 180 of the image encoding apparatus 100, and FIG. 5 is a flowchart illustrating a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

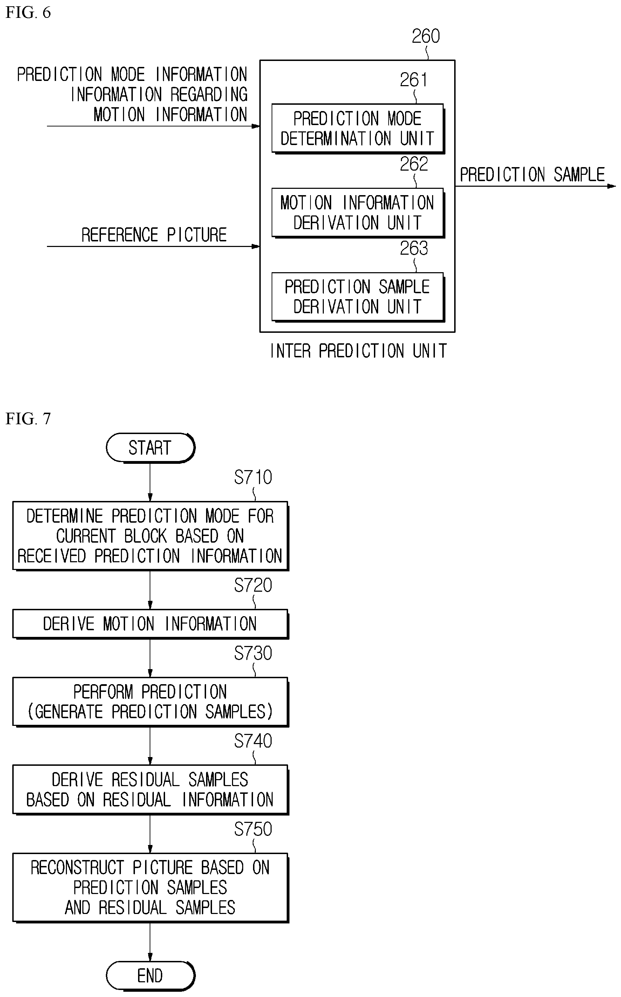

FIG. 6 is a diagram schematically showing the inter predictor 260 of the image decoding apparatus 200, and FIG. 7 is a flowchart showing a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter predictor 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

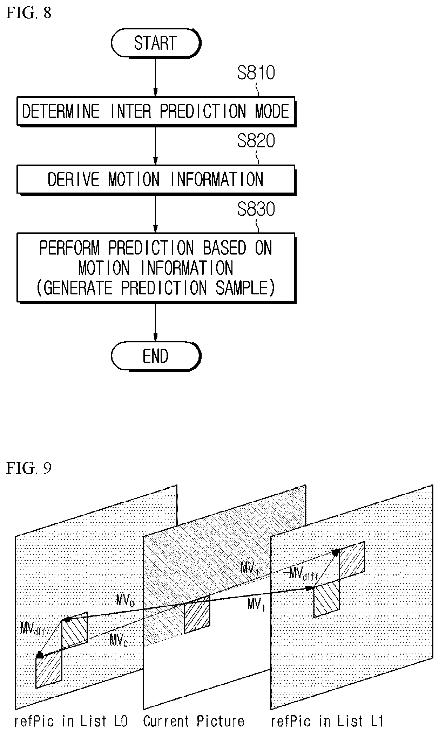

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

**Inter prediction mode determination**

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

**Derivation of motion information**

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

**DMVR (Decoder side Motion Vector Refinement)**

DMVR is a method of performing motion prediction by refining motion information of neighboring blocks on the decoder side. When DMVR is applied, the decoder may derive refined motion information through cost comparison based on a template generated using motion information of neighboring blocks in merge/skip mode. According to an embodiment of the present invention, the precision of motion prediction can be increased and compression performance can be improved without additional signaling information.

Hereinafter, for the convenience of explanation, the following description focuses on the decoder side, but the DMVR of the present disclosure may be performed on the encoder side in the same manner. Meanwhile, DMVR may be regarded as an example of a motion information derivation procedure in that a motion vector is refined, or may be regarded as an example of a prediction sample generation procedure in that a prediction sample is generated based on reference blocks indicated by a refined MV pair.

In a bi-prediction process, the refined MV may be searched around the initial MVs in the reference picture list L0 and the reference picture list L1. According to the bilateral matching (BM) method, the distortion between two candidate blocks in the reference picture list L0 and the list L1 may be calculated. Referring to FIG. 9, the SAD between the red blocks (indicated by MVdiff) may be calculated based on each MV candidate within the search range centered on the initial MV. At this time, the MV candidate with the lowest SAD may be the refined MV and may be used to generate a bilateral prediction signal.

In one embodiment, the decoder may invoke the DMVR process to improve the accuracy of the initial motion compensation prediction (i.e., motion compensation prediction via conventional merge/skip mode). For example, the decoder may perform the DMVR process when the prediction mode of the current block is merge mode or skip mode and bilateral bi-prediction in which bilateral reference pictures are in opposite directions with respect to the current picture in display order is applied to the current block

Specifically, for example, DMVR may be applied to CUs coded with the following modes and features.

· CU-level merge mode with bilateral prediction MV
· One reference picture precedes the current picture and the other reference picture follows the current picture
· The distance from the two reference pictures to the current picture (i.e., POC difference) is equal to each other
· CU has 64 luma samples
· CU height and CU width are both greater than or equal to 8 luma samples
· BCW weight indices indicate the same weights
· WP is not active for the current block

The refined MV derived by the DMVR process may be used not only to generate inter prediction samples, but also to predict temporal motion vectors for future picture coding. The original MV may be used not only in the deblocking process, but also to predict spatial motion vectors for future CU coding. Additional features of VTM5 DVMR are as follows.

(1) Searching scheme

In DMVR, the search points surround the initial MV, and the MV offset conforms to the MV difference mirroring rule. In other words, all points checked by DMVR, denoted as a candidate MV pair (MV0, MV1), conform to the following Equations (1) and (2).

[Equation 1]

$$MV0' = MV0 + MV\_offset$$

[Equation 2]

$$MV1' = MV1 - MV\_offset$$

Here, MV_offset may represent a refinement offset between the initial MV and the refined MV in one of the reference pictures. In VTM5, a refinement search range may be two integer luma samples from the initial MV. In addition, the search process may include an integer sample offset search stage and a fractional sample refinement stage.

A full search of 25 point may be applied to the integer sample offset search. First, the SAD of the initial MV pair may be calculated. If the SAD of the initial MV is smaller than a predetermined threshold, the integer sample stage of DMVR may be terminated. Otherwise, the SADs of the remaining 24 points may be calculated and checked in the raster scan order. At this time, the point with the smallest SAD may be selected as the output of the integer sample offset search stage.

After the integer sample search, fractional sample refinement may be performed. In order to reduce the computational complexity, the fractional sample refinement may be derived using a parametric error surface formula instead of an additional search via SAD comparison. The fractional sample refinement may be conditionally performed based on the output of the integer sample search stage. If the integer sample search stage ends at a center with the smallest SAD in primary or secondary iteration search, the fractional sample refinement may be additionally applied.

In sub-pixel offset estimation based on parametric error surface, the cost at the center location and the costs at four surrounding locations from the center may be used to fit a 2-D parabolic error surface formula as in Equation 3.

[Equation 3]

$$E(x, y) = A(x - x_{min})^2 + B(y - y_{min})^2 + C$$

where, $(x_{min}, y_{min})$ corresponds to the fractional position of the smallest cost, and C may correspond to the minimum cost value. By solving the above-described equations using the cost values of five points, $(x_{min}, y_{min})$ may be calculated as in Equations 4 and 5.

[Equation 4]

$$x_{min} = (E(-1,0) - E(1,0))/(2(E(-1,0) + E(1,0) - 2E(0,0)))$$

[Equation 5]

$$y_{min} = (E(0,-1) - E(0,1))/(2((E(0,-1) + E(0,1) - 2E(0,0)))$$

Since all cost values are positive and the smallest value is E(0,0), the $x_{min}$ and $y_{min}$ values may be automatically constrained between -8 and 8. This may correspond to the half-pel offset with 1/16-pel MV accuracy in VTM5. Meanwhile, the calculated (xmin, ymin) may be added to the integer distance refinement MV to obtain the subpixel accuracy refinement delta MV.

(2) Bilinear-interpolation and sample padding

The resolution of MVs may be 1/16 luma samples. The fractional position samples may be interpolated using an 8-tap interpolation filter. In DMVR, the search points may surround the initial fractional-pel MV with integer sample offsets. Therefore, the fractional position samples need to be interpolated for the DMVR search process. To reduce the computational complexity, a bilinear-interpolation filter may be used to generate fractional samples for the search process in DMVR. Another important effect is that using the bilinear filter makes DMVR not access more reference samples than the general motion compensation process in the 2-sample search range. After obtaining the refined MV through the DMVR search process, a general 8-tap interpolation filter may be applied to generate final prediction. In order to not access more reference samples than the general motion compensation process, the samples that are not required for the interpolation process based on the original MV but are required for the interpolation process based on the refined MV may be filled from the available samples.

(3) Maximum DMVR processing unit

If the CU width and/or height is greater than 16 luma samples, the CU may be split into sub-blocks with widths and/or heights equal to 16 luma samples. The maximum unit size for the DMVR search process may be limited to 16x16.

**Generation of prediction sample**

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

## EP 4 557 732 A1

**Template matching (TM)**

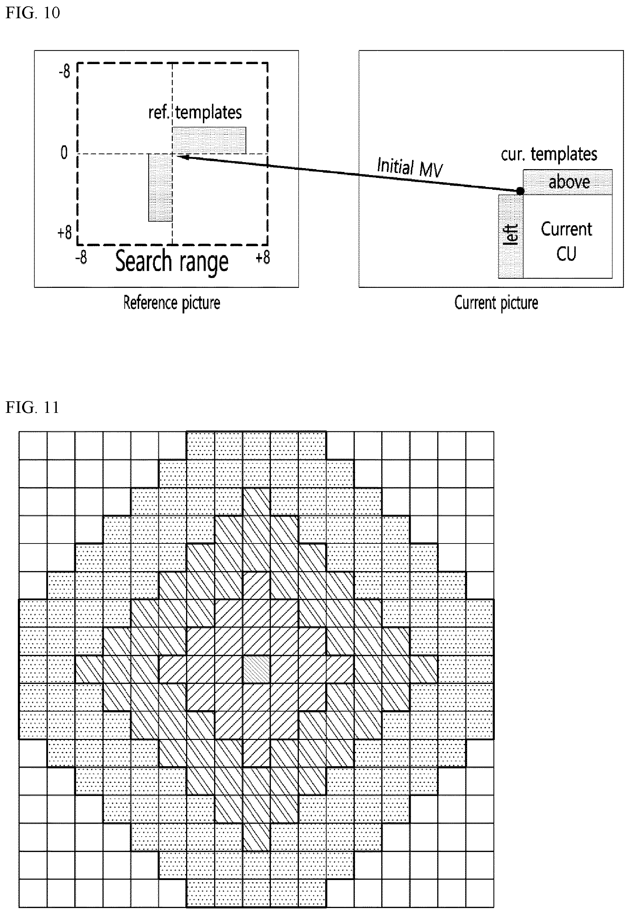

FIG. 10 is a diagram for explaining a template matching-based encoding/decoding method.

Template Matching (TM) is a motion vector derivation method performed on a decoder side, and is a method of refining motion information of a current block by finding a template (hereinafter referred to as "reference template") in a reference picture which is most similar to a template (hereinafter referred to as "current template") adjacent to a current block (e.g., current coding unit, current CU). The current template may be a top neighboring block and/or a left neighboring block of the current block, or may be some of these neighboring blocks. Additionally, the reference template may be determined to have the same size as the current template.

As shown in FIG. 10, when an initial motion vector of the current block is derived, a better search for a motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

If the prediction mode of the current block is the AMVP mode, a motion vector predictor candidate (MVP candidate) may be determined based on a template matching error. For example, a motion vector predictor candidate (MVP candidate) that minimizes an error between the current template and the reference template may be selected. After that, template matching for refining a motion vector may be performed on the selected motion vector predictor candidate. At this time, template matching for refining a motion vector may not be performed on motion vector predictor candidates that are not selected.

More specifically, the refinement of the selected motion vector predictor candidate may start from full-pel (integer-pel) accuracy within the [-8, +8]-pel search area using an iterative diamond search. Alternatively, in the case of a 4-pel AMVR mode, it may start from 4-pel accuracy. After that, a search with half-pel and/or quarter-pel accuracy may follow depending on the AMVR mode. According to the search process, the motion vector predictor candidate may maintain the same motion vector accuracy as indicated by the AMVR mode even after the template matching process. In the iterative search process, if a difference between a previous minimum cost and a current minimum cost is less than an arbitrary threshold, the search process is terminated. The threshold may be equal to the area of a block, i.e., the number of samples in the block. Table 1 shows examples of search patterns according to the AMVR mode and the merge mode accompanied with AMVR.

[Table 1]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

If the prediction mode of the current block is the merge mode, a similar search method may be applied to the merge candidate indicated by the merge index. As shown in Table 1 above, template matching may be performed up to 1/8-pel accuracy or half-pel accuracy or lower may be skipped, which may be determined depending on whether an alternative interpolation filter is used according to the merge motion information. In this case, the alternative interpolation filter may be a filter used when AMVR is the half-pel mode. In addition, if template matching is available, depending on whether bilateral matching (BM) is available, the template matching may operate as an independent process, or may operate as an additional motion vector refinement process between block-based bilateral matching and sub-block-based bilateral matching. Whether the template matching is available and/or whether the bilateral matching is available may be determined according to an availability condition check. In the above, the accuracy of the motion vector may mean the accuracy of a motion vector difference (MVD).

**Multi-pass Decoder-Side Motion Vector Refinement**

When multi-pass decoder-side motion vector refinement is applied, bilateral matching (BM) may be applied to a coding block in a first pass. In a second pass, BM may be applied to each 16x16 sub-block in the coding block. In a third pass, the MV of each 8x8 sub-block may be refined by applying bi-directional optical flow (BDOF). The refined MV may be stored for both spatial and temporal motion vector prediction.

(1) First pass - Block based bilateral matching MV refinement

In the first pass, the refined MV may be derived by applying BM to the coding block. Similar to the decoder-side motion vector refinement (DMVR), in the bi-prediction operation, the refined MV may be searched around two initial MVs MV0 and MV1 of reference picture lists L0 and L1. Refined MVs MV0_pass0 and MV1_pass1 may be searched around the initial MV based on the minimum bilateral matching cost between two reference blocks of L0 and L1.

In order to derive integer sample precision intDeltaMV during BM, a local search may be performed. The local search may loop in a search range [-sHor, sHor] in the horizontal direction and a search range [-sVer, sVer] in the vertical direction by applying a 3x3 square search pattern. Here, the values of sHor and sVer may be determined based on the block dimension, and the maximum value of sHor and sVer may be 8.

The bilateral matching cost may be derived as follows: bilCost = mvDistanceCost + sadCost. When the block size cbW * cbH is greater than 64, the MRSAD cost function may be applied to remove the DC effect of the distortion between reference blocks. When the bilCost at the center point of the 3x3 search pattern is the minimum cost, the intDeltaMV local search may be terminated. Otherwise, the current minimum cost search point becomes the new center point of the 3x3 search pattern, and the search for the minimum cost may be continued until the end of the search range is reached. The existing fractional sample refinement may be further applied to derive the final deltaMV. After the first pass, the refined MV may be derived as follows:

$$MV0\_pass1 = MV0 + deltaMV$$

$$MV1\_pass1 = MV1 - deltaMV$$

(2) Second pass - Subblock based bilateral matching MV refinement

In the second pass, the refined MV may be derived by applying BM to 16x16 grid sub-blocks. In each sub-block, the refined MV may be searched around two MVs MV0_pass1 and MV1_pass 1 obtained in the first pass for reference picture lists L0 and L1. The refined MVs MV0_pass2(sbIdx2) and MV1_pass2(sbIdx2) may be derived based on the minimum bilateral matching cost between two reference sub-blocks for L0 and L1.

In each sub-block, a full search may be performed to derive integer sample precision intDeltaMV during BM. The full search may have a search range [-sHor, sHor] in the horizontal direction and a search range [-sVer, sVer] in the vertical direction. Here, the values of sHor and sVer may be determined based on the block dimension, and the maximum value of sHor and sVer may be 8.

The bilateral matching cost may be calculated by applying a cost factor to the SATD cost between two reference blocks: bilCost = satdCost * costFactor. The search area (2*sHor + 1) * (2*sVer + 1) may be divided into up to five diamond-shaped search areas as shown in FIG. 11. FIG. 11 is a diagram showing search areas that may be applied in the multi-pass DMVR (Decoder-side Motion Vector Refinement). Each search area is assigned a costFactor determined by a distance intDeltaMV between each search point and the starting MV, and each diamond area may be processed in order starting from the center of the search area. In each area, the search points may be processed in raster scan order starting from the top left corner of the area to the bottom right corner. When the minimum bilCost in the current search area is less than a threshold value equal to sbW * sbH, the int-pel full search is terminated, but in the opposite case, the int-pel search may continue to the next search area until all search points are searched. Additionally, the search process may be terminated if the difference between the previous minimum cost and the current minimum cost in the loop is less than a threshold value equal to the area of the block.

The existing VVC DMVR fractional sample refinement may be further applied to derive the final deltaMV(sbIdx2). In the second pass, the refined MV may be derived as follows:

$$MV0\_pass2(sbIdx2) = MV0\_pass1 + deltaMV(sbIdx2)$$

$$MV1\_pass2(sbIdx2) = MV1\_pass1 - deltaMV(sbIdx2)$$

(3) Third pass - Subblock based bi-directional optical flow MV refinement

In the third pass, refined MVs may be derived by applying BDOF to 8x8 grid sub-blocks. For each 8x8 sub-block, starting from the refined MV of the upper sub-block of the second pass, BDOF refinement may be applied to derive scaled Vx and Vy without clipping. The derived bioMv(Vx, Vy) is rounded with 1/16 sample precision and may be clipped to a value between -32 and 32. The refined MVs MV0_pass3(sbIdx3) and MV1_pass3(sbIdx3) of the third pass may be derived as follows:

$$MV0\_pass3(sbIdx3) = MV0\_pass2(sbIdx2) + bioMv$$

$$MV1\_pass3(sbIdx3) = MV0\_pass2(sbIdx2) - bioMv$$

Adaptive decoder-side motion vector refinement

The adaptive decoder-side motion vector refinement technique is an extension of multi-pass DMVR consisting of two new merge modes that refine MVs in only one of L0 or L1 direction of bi-predictions for merge candidates satisfying DMVR conditions. The multi-pass DMVR process may be applied to the selected merge candidates to refine their motion vectors, but either MVD0 or MVD1 may be set to 0 in the first pass (i.e., first pass) (i.e., PU level) DMVR. The merge candidates for the new merge modes may be derived from spatial neighboring coding blocks, TMVP, non-adjacent blocks, HMVP, and pair-wise candidates similarly to the regular merge mode. The only difference is that only items satisfying the DMVR conditions may be added to the candidate list. The same merge candidate list may be used in the two new merge modes. If the BM candidate list includes inherited BCW weights, the DMVR process may remain unchanged except for the distortion calculation generated using MRSAD or MRSATD, if the weights are not equal or bi-prediction is weighted by a BCW weight. The merge index may be coded as in the regular merge mode.

Meanwhile, amvpMerge mode has been proposed to improve prediction accuracy in bidirectional prediction. amvpMerge mode is a type of inter prediction mode that combines AMVP mode and Merge mode in different prediction directions. According to amvpMerge mode, AMVP mode is applied to any prediction direction, and Merge mode is applied to the opposite prediction direction. In addition, of course, the motion information refinement scheme described above may be applied to amvpMerge mode. For example, motion vectors obtained in amvpMerge mode may be refined based on template matching (TM) or bilateral matching (BM). In amvpMerge mode, the motion information refinement process operates only when a predetermined syntax element or variable controlling DMVD (Decoder-side Motion Vector Derivation) is True. In other words, the above-described refinement tools are controlled together based on single flag information at a higher level, for example, a sequence level, or are controlled dependently so that the remaining tools are enabled only when one tool is enabled. However, since template matching (TM) and bilateral matching (BM) are different and separate tools, such tool dependency increases the signaling overhead of related information and reduces the encoding/decoding efficiency.

In order to solve such problems, the present disclosure proposes an independent control method of a motion information refinement tool and a syntax therefor. Various embodiments described in the present disclosure may be applied individually or in combination of two or more. Hereinafter, embodiments of the present disclosure will be described in detail with reference to the attached drawings.

Table 2 below is a diagram showing a syntax structure for controlling a motion information refinement tool according to one embodiment of the present disclosure.

[Table 2]

| LGE_syntax( ) { | Descriptor |
|---|---|
| ... | |

(continued)

| | |
|---|---|
| **Template_matching_based_refinement_enabled_flag** | u(1) |
| **Bilateral_matching_based_refinement_enabled_flag** | u(1) |
| ... | |
| } | |

The syntax in Table 2 may include syntax elements Template_matching_based_refinement_enabled_flag and Bilateral_matching_based_refinement_enabled_flag for the motion information refinement tool.

Template_matching_based_refinement_enabled_flag may indicate whether a motion information refinement process based on template matching (or a template matching based refinement tool) is enabled. For example, Template_matching_based_refinement_enabled_flag of a first value (e.g., 1) may indicate that the decoder-side template matching based motion information refinement process is enabled for CLVS (coded layer video sequence). In contrast, Template_matching_based_refinement_enabled_flag of a second value (e.g., 0) may indicate that the decoder-side template matching based motion information refinement process is disabled for CLVS.

Bilateral_matching_based_refinement_enabled_flag may indicate whether a bilateral matching based motion information refinement process (or, bilateral matching based refinement tool) is enabled. For example, Bilateral_matching_based_refinement_enabled_flag of a first value (e.g., 1) may indicate that the decoder-side bilateral matching based motion information refinement process is enabled for CLVS. In contrast, Bilateral_matching_based_refinement_enabled_flag of a second value (e.g., 0) may indicate that the decoder-side bilateral matching based motion information refinement process is disabled for CLVS.

The syntax in Table 2 may be implemented as one of a sequence parameter set (SPS), a picture parameter set (PPS), a picture header (PH), a slice header (SH), or a video parameter set (VPS), depending on the embodiment.

In amvpMerge mode, the process of performing motion information refinement based on the syntax in Table 2 may be divided as shown in Table 3 below.

[Table 3]

| Case | Template_matching_based_refinement_enabled_flag | Bilateral_matching_based_refinement_enabled_flag |
|---|---|---|
| 0 | 0 | 0 |
| 1 | 0 | 1 |
| 2 | 1 | 0 |
| 3 | 1 | 1 |

Referring to Table 3, in 'Case 0', the refinement process may be skipped in the motion information derivation process using amvpMerge. In 'Case 1', the decoder-side motion information refinement process based on bilateral matching (BM) may be conditionally applied in the motion information derivation process using amvpMerge. In 'Case 2', the decoder-side motion information refinement process based on template matching (TM) may be conditionally applied in the motion information derivation process using amvpMerge. In 'Case 3', the decoder-side motion information refinement process based on template matching (TM) or the decoder-side motion information refinement process based on bilateral matching (BM) may be conditionally applied in in the motion information derivation process using amvpMerge.

In the above-described 'Case 1' to 'Case 3', an additional condition for motion information refinement may relate to a distance between the reference picture and the current picture. Specifically, based on whether the distance based on the picture order count (POC) difference between the reference picture and the current picture is the same for all prediction directions, a bilateral matching (BM)-based refinement tool (if the condition is True) or a template matching (TM)-based refinement tool (if the condition is False) may be selectively applied.

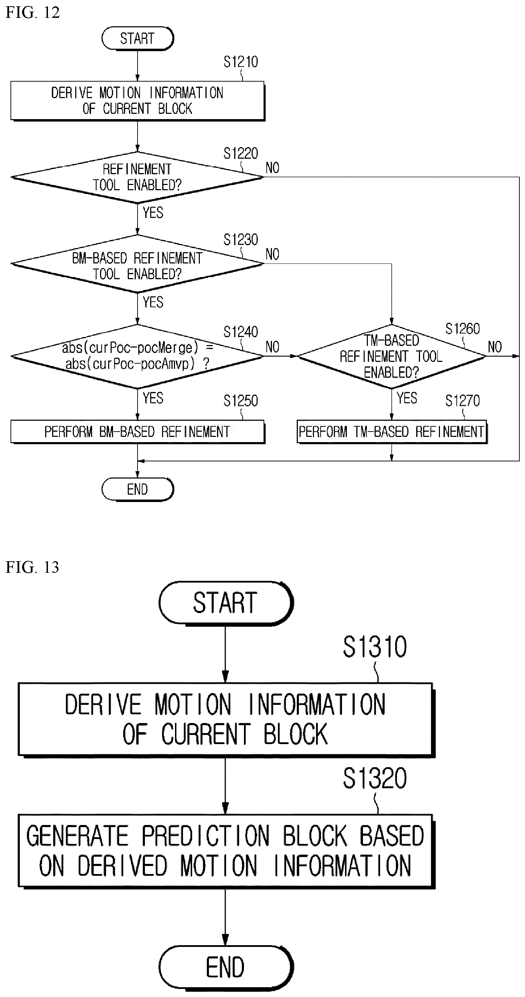

FIG. 12 is a flowchart illustrating a motion information refinement process according to an embodiment of the present disclosure. Each step of FIG. 12 may be performed by the image encoding apparatus 100 or the image decoding apparatus 200. Hereinafter, for convenience of explanation, each step of FIG. 12 will be described based on the image decoding apparatus 200.

Referring to FIG. 12, the image decoding apparatus 200 may derive motion information of a current block for each prediction direction based on the application of the amvpMerge mode to the current block (S1210).

Specifically, the image decoding apparatus 200 may determine a prediction mode to be applied to each prediction direction based on predetermined flag information (e.g., amvpMergeModeFlag[mergeDir]). For example, if amvpMerge-

ModeFlag[0] is True, the image decoding apparatus 200 may apply the Merge mode to the L0 direction and apply the AMVP mode to the L1 direction. In contrast, if amvpMergeModeFlag[1] is True, the image decoding apparatus 200 may apply the Merge mode to the L1 direction and apply the AMVP mode to the L0 direction.

The image decoding apparatus 200 may construct a reference picture list for each prediction direction according to the determined prediction mode. For example, when the Merge mode is applied to the L0 direction, the image decoding apparatus 200 may set the reference picture list (e.g., refListMerge) for the Merge mode to REF_PIC_LIST_0. In contrast, when the Merge mode is applied to the L1 direction, the image decoding apparatus 200 may set the reference picture list (e.g., refListMerge) for the Merge mode to REF_PIC_LIST_1. The reference picture list (e.g., refListAmvp) for the AMVP mode may be set to '1 - refListMerge' since it has an opposite prediction direction to the Merge mode.

The image decoding apparatus 200 may determine a reference picture for each prediction direction based on a reference picture list (e.g., refListMerge and refListAmvp) and a reference index (e.g., refIdx[refListMerge], refIdx[refListAmvp]), and derive motion information of the current block based on the determined reference picture. The motion information may include a motion vector of the current block and POC (Picture order count) information, for example, curPoc, pocMerge, or pocAmvp. Here, curPoc may indicate a POC of a current picture, pocMerge may indicate a POC of a reference picture for a Merge mode, and pocAmvp may indicate a POC of a reference picture for an AMVP mode.

In addition, the image decoding apparatus 200 may determine whether a template matching (TM)-based refinement tool or a bilateral matching (BM)-based refinement tool is enabled to refine the derived motion information (S1220). Here, whether the template matching (TM)-based refinement tool is enabled may be determined based on the call result value of useTM(). useTM() may mean a function that determines whether a decoder-side motion information refinement process based on template matching (TM) is enabled based on the syntax element Template_matching_based_refinement_enabled_flag described above with reference to Table 2 or through a separate derivation process. For example, when the call result value of useTM() is True, the decoder-side motion information refinement process based on template matching (TM) may be enabled. In contrast, when the call result value of useTM() is False, the decoder-side motion information refinement process based on template matching (TM) may be disabled.

In addition, whether the bilateral matching (BM)-based refinement tool is enabled can be determined based on the call result value of useBM(). useBM() may mean a function that determines whether the decoder-side motion information refinement process based on bilateral matching (BM) is enabled based on the syntax element Bilateral_matching_based_refinement_enabled_flag described above with reference to Table 2 or through a separate derivation process. For example, if the call result value of useBM() is True, the decoder-side motion information refinement process based on bilateral matching (BM) may be enabled. In contrast, if the call result value of useBM() is False, the decoder-side motion information refinement process based on bilateral matching (BM) may be disabled.

If at least one of a template matching (TM)-based refinement tool or a bilateral matching (BM)-based refinement tool is enabled (e.g., (useTM()||useBM()) = True) ('YES' of S1220), the image decoding apparatus 200 may determine whether the bilateral matching (BM)-based refinement tool is enabled (e.g., useBM()) (S1230).

As a result of determination, if the bilateral matching (BM)-based refinement tool is enabled (e.g., useBM()=True) ('YES' of S1230), the image decoding apparatus 200 may determine whether the POC difference between the reference picture and the current picture in the Merge mode (i.e., abs(curPoc-pocMerge)) (hereinafter referred to as the 'first POC difference') is equal to the POC difference between the reference picture and the current picture in the AMVP mode (i.e., abs(curPoc-pocAmvp)) (hereinafter referred to as the 'second POC difference') (S1240).

If the first POC difference is equal to the second POC difference ('YES' of S1240), the image decoding apparatus 200 may refine the motion information of the current block derived by the amvpMerge mode based on bilateral matching (BM) (S1250).

In contrast, if the bilateral matching (BM)-based refinement tool is disabled ('NO' of S1230) or the first POC difference is different from the second POC difference ('NO' of S1240), the image decoding apparatus 200 may determine whether the template matching (TM)-based refinement tool is enabled (e.g., useTM()) (S1260).

As a result of determination, if the template matching (TM)-based refinement tool is enabled (e.g., useTM()=True) ('YES' of S1260), the image decoding apparatus 200 may refine the motion information of the current block derived by the amvpMerge mode based on template matching (TM) (S1270).

In contrast, if the template matching (TM)-based refinement tool is disabled (e.g., useTM()=False) ('NO' in S1260), the image decoding apparatus 200 may determine not to perform the motion information refinement process and may generate a prediction block of the current block using the motion information derived in step S1210.

Meanwhile, although FIG. 12 illustrates the case of amvpMerge mode, this is only an example, and the embodiments of the present disclosure are not limited thereto. For example, it goes without saying that the motion information refinement process of FIG. 12 may be applied to the general Merge mode as well.

According to the embodiments of the present disclosure, the template matching (TM)-based refinement tool and the bilateral matching (BM)-based refinement tool may be controlled individually. Accordingly, tool dependency can be eliminated, signaling overhead of related information can be reduced, and encoding/decoding efficiency can be further improved.

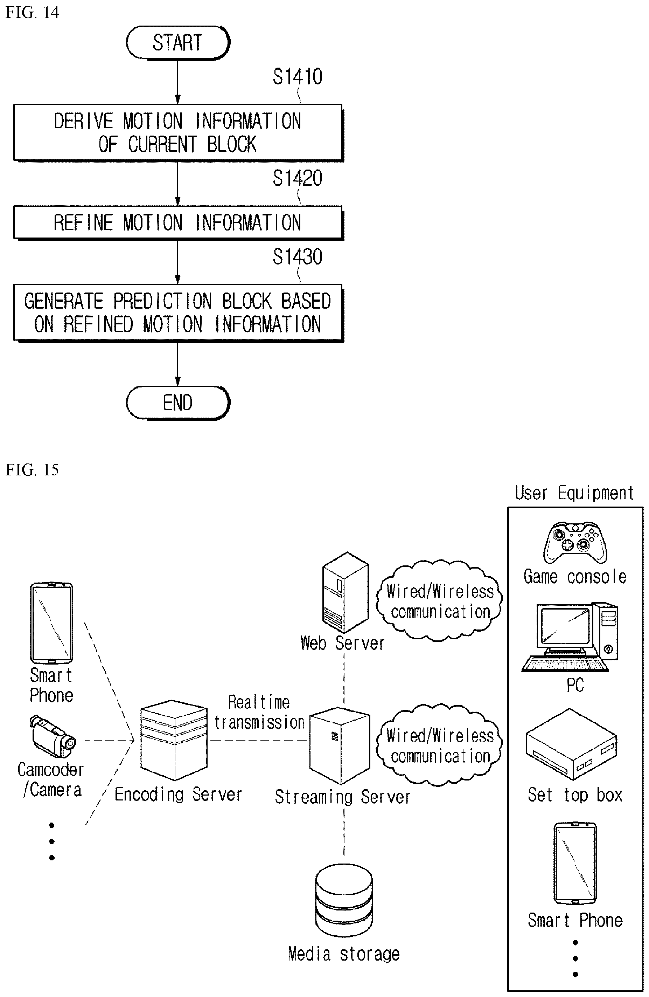

Hereinafter, with reference to FIGS. 13 and 14, an image encoding/decoding method according to an embodiment of the present disclosure will be described in detail.

FIG. 13 is a flowchart illustrating an image encoding method according to an embodiment of the present disclosure. The image encoding method of FIG. 13 may be performed by the image encoding apparatus of FIG. 2.

Referring to FIG. 13, if a prediction mode of a current block is an inter prediction mode (e.g., Merge, AMVP, amvpMerge, etc.), the image encoding apparatus may derive motion information of the current block (S1310) and generate a prediction block of the current block based on the motion information (S1320).

In one embodiment, information on decoder-side refinement of the motion information may be encoded in a bitstream. The information on decoder-side refinement may include flag information indicating whether a predetermined refinement tool is enabled.

In one embodiment, the refinement tool may include a template matching-based tool and a bilateral matching-based tool. In addition, whether the bilateral matching-based tool is enabled may be determined regardless of whether the template matching-based tool is enabled.

In one embodiment, the flag information may include first flag information indicating whether the template matching-based tool is enabled and second flag information indicating whether the bilateral matching-based tool is enabled. At this time, the second flag information may be encoded regardless of the value of the first flag information. In addition, the first flag information and the second flag information may be encoded at a sequence level (e.g., SPS), a picture level (e.g., PPS, PH), a slice level (e.g., SH) or a video level (e.g., VPS).

In one embodiment, when the bilateral matching-based tool is enabled and a picture order count (POC) difference between a current picture including the current block and a reference picture of the current block is the same for all prediction directions of the current block, the decoder-side refinement may be performed based on the bilateral matching-based tool.

In one embodiment, when the bilateral matching-based tool is enabled and the picture order count (POC) difference between the current picture including the current block and the reference picture of the current block is different in for prediction direction of the current block, the decoder-side refinement may be performed based on the template matching-based tool based on the template matching-based tool being enabled.

In one embodiment, when the bilateral matching based tool is disabled and the template matching based tool is enabled, the decoder-side refinement may be performed based on the template matching based tool.

The bitstream generated by the above-described image encoding method may be stored in a computer-readable recording medium or transmitted to the image decoding apparatus via a network.

FIG. 14 is a flowchart illustrating an image decoding method according to an embodiment of the present disclosure. The image decoding method of FIG. 14 may be performed by the image decoding apparatus of FIG. 3.

Referring to FIG. 14, if a prediction mode of a current block is an inter prediction mode (e.g., Merge, AMVP, amvpMerge, etc.), the image decoding apparatus may derive motion information of the current block (S1410), refine the motion information based on an enabled predetermined refinement tool (S1420), and generate a prediction block of the current block based on the refined motion information (S1430).

In one embodiment, the refinement tool includes a template matching-based tool and a bilateral matching-based tool, and whether the bilateral matching-based tool is enabled may be determined regardless of whether the template matching-based tool is enabled.

In one embodiment, whether the template matching-based tool is enabled may be determined based on first flag information, and whether the bilateral matching-based tool is enabled may be determined based on second flag information. In this case, the second flag information may be signaled regardless of the value of the first flag information. In addition, the first flag information and the second flag information may be signaled at a sequence level (e.g., SPS), a picture level (e.g., PPS, PH), a slice level (e.g., SH), or a video level (e.g., VPS).

In one embodiment, when the bilateral matching-based tool is enabled and a picture order count (POC) difference between a current picture including the current block and a reference picture of the current block is the same for all prediction directions of the current block, the motion information of the current block may be refined based on the bilateral matching-based tool.

In one embodiment, when the bilateral matching-based tool is enabled and the picture order count (POC) difference between the current picture including the current block and the reference picture of the current block is different for each prediction direction of the current block, the motion information of the current block may be refined based on the template matching-based tool based on the template matching-based tool being enabled.

In one embodiment, when the bilateral matching-based tool is disabled and the template matching-based tool is enabled, the motion information of the current block may be refined based on the template matching-based tool.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

FIG. 15 is a view showing a content streaming system, to which an embodiment of the present disclosure is applicable.

As shown in FIG. 15, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   deriving motion information of a current block;
   refining the motion information based on an enabled predetermined refinement tool; and
   generating a prediction block of the current block based on the refined motion information,
   wherein the refinement tool includes a template matching-based tool and a bilateral matching-based tool, and
   wherein whether the bilateral matching-based tool is enabled is determined regardless of whether the template matching-based tool is enabled.

2. The image decoding method of claim 1,

   wherein whether the template matching-based tool is enabled is determined based on first flag information and whether the bilateral matching-based tool is enabled is determined based on second flag information, and
   wherein the second flag information is signaled regardless of a value of the first flag information.

3. The image decoding method of claim 2, wherein the first flag information and the second flag information are signaled at a sequence level, a picture level, a slice level or a video level.

4. The image decoding apparatus of claim 1, wherein based on the bilateral matching-based tool being enabled and whether a picture order count (POC) difference between a current picture including the current block and a reference picture of the current block is the same for all prediction directions of the current block, the motion information of the current block is refined based on the bilateral matching-based tool.

5. The image decoding method of claim 1, wherein based on the bilateral matching-based tool being enabled and whether a picture order count (POC) difference between a current picture including the current block and a reference picture of the current block is different for all prediction directions of the current block, the motion information of the current block is refined based on the template matching-based tool, based on the template matching-based tool being enabled.

6. The image decoding method of claim 1, wherein based on the bilateral matching-based tool being disabled and the template matching-based tool being enabled, the motion information of the current block is refined based on the template matching-based tool.

7. An image decoding apparatus comprising a memory and at least one processor,
   wherein the at least one processor is configured to:

   derive motion information of a current block;
   refine the motion information based on an enabled predetermined refinement tool; and
   generate a prediction block of the current block based on the refined motion information,
   wherein the refinement tool includes a template matching-based tool and a bilateral matching-based tool, and
   wherein whether the bilateral matching-based tool is enabled is determined regardless of whether the template matching-based tool is enabled.

8. An image encoding method performed by an image encoding apparatus, the image encoding method comprising:

   deriving motion information of a current block; and
   generating a prediction block of the current block based on the motion information,
   wherein information on decoder-side refinement of the motion information is encoded in a bitstream, and information on the decoder-side refinement includes flag information indicating whether a predetermined refinement tool is enabled,
   wherein the refinement tool includes a template matching-based tool and a bilateral matching-based tool, and
   wherein whether the bilateral matching-based tool is enabled is determined regardless of whether the template matching-based tool is enabled.

9. The image encoding method of claim 8,

wherein the flag information includes first flag information indicating whether the template matching-based tool is enabled and second flag information indicating whether the bilateral matching-based tool is enabled, and wherein the second flag information is encoded regardless of a value of the first flag information.

10. The image encoding method of claim 9, wherein the first flag information and the second flag information are encoded at a sequence level, a picture level, a slice level or a video level.

11. The image encoding apparatus of claim 8, wherein based on the bilateral matching-based tool being enabled and whether a picture order count (POC) difference between a current picture including the current block and a reference picture of the current block is the same for all prediction directions of the current block, the decoder-side refinement is performed based on the bilateral matching-based tool.

12. The image encoding method of claim 8, wherein based on the bilateral matching-based tool being enabled and whether a picture order count (POC) difference between a current picture including the current block and a reference picture of the current block is different for all prediction directions of the current block, the decoder-side refinement is performed based on the template matching-based tool, based on the template matching-based tool being enabled.

13. The image encoding method of claim 8, wherein based on the bilateral matching-based tool being disabled and the template matching-based tool being enabled, the decoder-side refinement is performed based on the template matching-based tool.

14. A non-transitory computer-readable recording medium for storing a bitstream generated by the image encoding method of claim 8.

15. A method of transmitting a bitstream generated by an image encoding method, the image encoding method comprising:

deriving motion information of a current block; and
generating a prediction block of the current block based on the motion information,
wherein information on decoder-side refinement of the motion information is encoded in a bitstream, and information on the decoder-side refinement includes flag information indicating whether a predetermined refinement tool is enabled,
wherein the refinement tool includes a template matching-based tool and a bilateral matching-based tool, and
wherein whether the bilateral matching-based tool is enabled is determined regardless of whether the template matching-based tool is enabled.

FIG. 1

FIG. 2

FIG. 3

FIG. 4

ORIGINAL PICTURE →

180

181
PREDICTION MODE
DETERMINATION UNIT

182
MOTION INFORMATION
DERIVATION UNIT

REFERENCE PICTURE →

183
PREDICTION SAMPLE
DERIVATION UNIT

INTER PREDICTION UNIT

→ PREDICTION MODE INFORMATION
INFORMATION REGARDING
MOTION INFORMATION

→ PREDICTION SAMPLE

FIG. 5

START

S510
PERFORM PREDICTION (DETERMINE
INTER PREDICTION MODE, DERIVE
MOTION INFORMATION AND
GENERATE PREDICTION SAMPLES)

S520
DERIVE RESIDUAL SAMPLES
BASED ON PREDICTION SAMPLES

S530
ENCODE IMAGE INFORMATION
INCLUDING PREDICTION INFORMATION
AND RESIDUAL INFORMATION

END

FIG. 6

260

261

PREDICTION MODE INFORMATION
INFORMATION REGARDING
MOTION INFORMATION

PREDICTION MODE
DETERMINATION UNIT

262

MOTION INFORMATION
DERIVATION UNIT

REFERENCE PICTURE

263

PREDICTION SAMPLE
DERIVATION UNIT

PREDICTION SAMPLE

INTER PREDICTION UNIT

FIG. 7

START

S710

DETERMINE PREDICTION MODE FOR
CURRENT BLOCK BASED ON
RECEIVED PREDICTION INFORMATION

S720

DERIVE MOTION INFORMATION

S730

PERFORM PREDICTION
(GENERATE PREDICTION SAMPLES)

S740

DERIVE RESIDUAL SAMPLES
BASED ON RESIDUAL INFORMATION

S750

RECONSTRUCT PICTURE BASED ON
PREDICTION SAMPLES
AND RESIDUAL SAMPLES

END

FIG. 8

```
              ( START )
                  │
                  │              S810
                  ▼             ╭─╮
  ┌─────────────────────────────────┐
  │ DETERMINE INTER PREDICTION MODE │
  └─────────────────────────────────┘
                  │              S820
                  ▼             ╭─╮
  ┌─────────────────────────────────┐
  │    DERIVE MOTION INFORMATION    │
  └─────────────────────────────────┘
                  │              S830
                  ▼             ╭─╮
  ┌─────────────────────────────────┐
  │   PERFORM PREDICTION BASED ON   │
  │        MOTION INFORMATION       │
  │  (GENERATE PREDICTION SAMPLE)   │
  └─────────────────────────────────┘
                  │
                  ▼
               ( END )
```

FIG. 9

refPic in List L0    Current Picture    refPic in List L1

FIG. 10

FIG. 11

FIG. 12

```
                        ( START )
                           │
                           ▼                    S1210
              ┌────────────────────────────┐
              │   DERIVE MOTION INFORMATION │
              │      OF CURRENT BLOCK       │
              └────────────────────────────┘
                           │
                           ▼                    S1220
                       ╱─────────╲          NO
                   ╱   REFINEMENT   ╲ ──────────────────────────┐
                   ╲  TOOL ENABLED? ╱                           │
                       ╲─────────╱                              │
                           │ YES                                │
                           ▼                    S1230           │
                      ╱───────────╲         NO                  │
                  ╱ BM-BASED REFINEMENT ╲ ─────────┐            │
                  ╲    TOOL ENABLED?    ╱          │            │
                      ╲───────────╱                │            │
                           │ YES                   │            │
                           ▼           S1240       ▼  S1260     │
              ╱────────────────────╲    NO    ╱──────────╲   NO │
          ╱  abs(curPoc-pocMerge) =  ╲ ─────╱   TM-BASED   ╲────┤
          ╲  abs(curPoc-pocAmvp) ?   ╱      ╲ REFINEMENT TOOL╱   │
              ╲────────────────────╱         ╲  ENABLED?   ╱     │
                     │ YES    S1250              │ YES  S1270    │
        ┌────────────────────────────┐     ┌───────────────────────┐
        │ PERFORM BM-BASED REFINEMENT │     │PERFORM TM-BASED REFINEMENT│
        └────────────────────────────┘     └───────────────────────┘
                     │                              │             │
                     ▼◄─────────────────────────────┴─────────────┘
                  ( END )
```

FIG. 13

```
                    ( START )
                        │
                        ▼                   S1310
        ┌──────────────────────────────────┐
        │     DERIVE MOTION INFORMATION     │
        │        OF CURRENT BLOCK           │
        └──────────────────────────────────┘
                        │
                        ▼                   S1320
        ┌──────────────────────────────────┐
        │  GENERATE PREDICTION BLOCK BASED  │
        │   ON DERIVED MOTION INFORMATION   │
        └──────────────────────────────────┘
                        │
                        ▼
                     ( END )
```

FIG. 14

FIG. 15

# EP 4 557 732 A1

## INTERNATIONAL SEARCH REPORT

International application No.

**PCT/KR2023/010011**

### A. CLASSIFICATION OF SUBJECT MATTER

**H04N 19/513**(2014.01)i; **H04N 19/70**(2014.01)i; **H04N 19/176**(2014.01)i; **H04N 19/119**(2014.01)i; **H04N 19/96**(2014.01)i

According to International Patent Classification (IPC) or to both national classification and IPC

### B. FIELDS SEARCHED

Minimum documentation searched (classification system followed by classification symbols)

H04N 19/513(2014.01); H04N 19/103(2014.01); H04N 19/105(2014.01); H04N 19/176(2014.01); H04N 19/52(2014.01); H04N 19/56(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리파인먼트(refinement), 템플릿 매칭(Template Matching), 양방향 매칭(Bilateral Matching), 블록(block), 움직임(motion), 예측(prediction), 플래그(flag), POC(picture order count)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0024765 A (KT CORPORATION) 08 March 2019 (2019-03-08)<br>See paragraph [0225]; and claims 1 and 3. | 1-3,6-10,13-15 |
| A | | 4-5,11-12 |
| A | KR 10-2020-0143408 A (QUALCOMM INCORPORATED) 23 December 2020 (2020-12-23)<br>See claims 1-39. | 1-15 |
| A | US 2020-0077088 A1 (MEDIATEK INC.) 05 March 2020 (2020-03-05)<br>See paragraphs [0037]-[0042]. | 1-15 |
| A | KR 10-2021-0008046 A (HUAWEI TECHNOLOGIES CO., LTD.) 20 January 2021 (2021-01-20)<br>See paragraphs [0064]-[0069]. | 1-15 |
| A | KR 10-2021-0019097 A (HUAWEI TECHNOLOGIES CO., LTD.) 19 February 2021 (2021-02-19)<br>See claims 13-20. | 1-15 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 October 2023** | **18 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010011**

| Patent document cited in search report | | | Publication date (day/month/year) | Patent family member(s) | | | Publication date (day/month/year) |
|---|---|---|---|---|---|---|---|
| KR | 10-2019-0024765 | A | 08 March 2019 | US | 11457235 | B2 | 27 September 2022 |
| | | | | US | 2020-0154135 | A1 | 14 May 2020 |
| | | | | US | 2022-0417554 | A1 | 29 December 2022 |
| | | | | WO | 2019-045392 | A1 | 07 March 2019 |
| KR | 10-2020-0143408 | A | 23 December 2020 | EP | 3782367 | A1 | 24 February 2021 |
| | | | | US | 10779002 | B2 | 15 September 2020 |
| | | | | US | 2019-0320197 | A1 | 17 October 2019 |
| | | | | WO | 2019-204297 | A1 | 24 October 2019 |
| US | 2020-0077088 | A1 | 05 March 2020 | EP | 3342167 | A1 | 04 July 2018 |
| | | | | EP | 3342167 | A4 | 12 June 2019 |
| | | | | EP | 3342167 | B1 | 30 December 2020 |
| | | | | EP | 3876541 | A1 | 08 September 2021 |
| | | | | US | 10511835 | B2 | 17 December 2019 |
| | | | | US | 2018-0249154 | A1 | 30 August 2018 |
| | | | | WO | 2017-036414 | A1 | 09 March 2017 |
| KR | 10-2021-0008046 | A | 20 January 2021 | EP | 3794826 | A1 | 24 March 2021 |
| | | | | JP | 2021-530144 | A | 04 November 2021 |
| | | | | KR | 10-2023-0122686 | A | 22 August 2023 |
| | | | | US | 11310521 | B2 | 19 April 2022 |
| | | | | US | 2021-0076059 | A1 | 11 March 2021 |
| | | | | US | 2022-0132158 | A1 | 28 April 2022 |
| | | | | WO | 2020-007199 | A1 | 09 January 2020 |
| KR | 10-2021-0019097 | A | 19 February 2021 | EP | 3794827 | A1 | 24 March 2021 |
| | | | | EP | 3799693 | A1 | 07 April 2021 |
| | | | | JP | 2021-529471 | A | 28 October 2021 |
| | | | | JP | 2023-014095 | A | 26 January 2023 |
| | | | | US | 2020-0404323 | A1 | 24 December 2020 |
| | | | | US | 2021-0195232 | A1 | 24 June 2021 |
| | | | | US | 2022-0394291 | A1 | 08 December 2022 |
| | | | | WO | 2020-001574 | A1 | 02 January 2020 |
| | | | | WO | 2020-001578 | A1 | 02 January 2020 |

Form PCT/ISA/210 (patent family annex) (July 2022)